(19) **Europäisches Patentamt / European Patent Office / Office européen des brevets**

(11) **EP 4 636 849 A1**

(12) **EUROPEAN PATENT APPLICATION**
published in accordance with Art. 153(4) EPC

(43) Date of publication:
**22.10.2025 Bulletin 2025/43**

(21) Application number: **23903765.8**

(22) Date of filing: **08.11.2023**

(51) International Patent Classification (IPC):
$H01M\ 4/36^{(2006.01)}$     $H01M\ 4/525^{(2010.01)}$
$H01M\ 4/505^{(2010.01)}$     $H01M\ 4/62^{(2006.01)}$
$H01M\ 4/131^{(2010.01)}$     $H01M\ 10/052^{(2010.01)}$
$C01G\ 53/00^{(2025.01)}$     $H01M\ 4/02^{(2006.01)}$

(52) Cooperative Patent Classification (CPC):
C01G 53/00; H01M 4/02; H01M 4/131; H01M 4/36;
H01M 4/505; H01M 4/525; H01M 4/62;
H01M 10/052; Y02E 60/10

(86) International application number:
**PCT/KR2023/017903**

(87) International publication number:
**WO 2024/128562 (20.06.2024 Gazette 2024/25)**

(84) Designated Contracting States:
**AL AT BE BG CH CY CZ DE DK EE ES FI FR GB GR HR HU IE IS IT LI LT LU MC ME MK MT NL NO PL PT RO RS SE SI SK SM TR**
Designated Extension States:
**BA**
Designated Validation States:
**KH MA MD TN**

(30) Priority: **16.12.2022  KR 20220177626**

(71) Applicants:
• **POSCO Holdings Inc.**
  **Seoul 06194 (KR)**
• **RESEARCH INSTITUTE OF INDUSTRIAL SCIENCE & TECHNOLOGY**
  **Pohang-si, Gyeongsangbuk-do 37673 (KR)**

(72) Inventors:
• **MOON, Ji Woong**
  **Pohang-si, Gyeongsangbuk-do 37673 (KR)**
• **EUN, Tai Hee**
  **Pohang-si, Gyeongsangbuk-do 37671 (KR)**
• **PARK, Yooncheol**
  **Pohang-si, Gyeongsangbuk-do 37673 (KR)**
• **YUN, Jeongsik**
  **Busan 46516 (KR)**
• **LEE, Jae Myung**
  **Pohang-si, Gyeongsangbuk-do 37673 (KR)**
• **SONG, Jung Hoon**
  **Gwacheon-si, Gyeonggi-do 13835 (KR)**
• **NAM, Sang Cheol**
  **Seoul 02587 (KR)**

(74) Representative: **Pfenning, Meinig & Partner mbB**
**Patent- und Rechtsanwälte**
**Theresienhöhe 11a**
**80339 München (DE)**

(54) **ALL-SOLID-STATE BATTERY CATHODE ACTIVE MATERIAL, PREPARATION METHOD THEREFOR, AND ALL-SOLID-STATE BATTERY COMPRISING SAME**

(57)    The present invention relates to a positive electrode active material for an all-solid-state battery, comprising:
a core comprising a layered lithium transition metal oxide; and a coating layer disposed on the core and comprising a lithium-ion conductive oxide,
wherein the positive electrode active material is a secondary particle formed by aggregation of a plurality of primary particles, wherein the primary particles have a flake or needle shape and an average thickness of 50 nm or less, and wherein a full width at half maximum (FWHM) of a diffraction peak of a (110) plane in an X-ray diffraction spectrum is 0.2 or less.

[FIG. 1]

**Description**

## FIELD OF THE INVENTION

The present invention relates to a positive electrode active material for an all-solid-state battery, a method for manufacturing the same, and an all-solid-state battery including the same. More particularly, the present invention relates to a layered positive electrode active material for an all-solid-state battery, a method for manufacturing the same, and an all-solid-state battery including the same.

## DESCRIPTION OF THE RELATED ART

In recent years, with increasing demands for enhanced driving range and improved safety of electric vehicles, the development of lithium secondary batteries that offer both high safety and high energy density in terms of weight and volume has become critically important. In particular, since the energy capacity required for electric vehicles is on the order of several tens of kilowatt-hours, any damage to the battery can lead to a high risk of large-scale fires and explosions. Accordingly, active research is underway to replace liquid electrolytes with solid electrolytes.

Among such solid-state battery architectures, it is common to adopt a structure in which a solid electrolyte is applied as a secondary electrolyte inside the positive electrode to form a lithium-ion conduction pathway for ease of manufacturing. In particular, sulfide-based solid electrolytes are being extensively studied due to their high ionic conductivity and ease of densification through mechanical compression.

The positive electrode active materials used in combination with these sulfide-based solid electrolytes are typically oxide-based materials with a layered structure, such as NCM (nickel-cobalt-manganese) or NCA (nickel-cobalt-aluminum), similar to those used in conventional lithium-ion batteries. However, such oxide-based positive electrode materials tend to react with the sulfide-based solid electrolytes at the interface, forming a high-resistance interfacial layer. As a countermeasure, coating the surface of the active material with a lithium-ion conductive oxide has been proposed to suppress interfacial reactions and enhance performance.

Although such lithium-ion conductive oxide-coated active materials exhibit significant improvements in initial capacity, efficiency, and cycle life compared to uncoated materials, challenges remain. In particular, when the active material loading of the electrode is increased or high-rate (high C-rate) discharge is applied, a substantial drop in discharge capacity is observed.

## SUMMARY OF THE INVENTION

## TECHNICAL PROBLEM

One aspect of the present invention is to provide a positive electrode active material for an all-solid-state battery, a method for manufacturing the same, and an all-solid-state battery including the same, which can improve the discharge capacity of the battery under high output (high C-rate) conditions.

## TECHNICAL SOLUTION

According to one embodiment of the present invention, there is provided a positive electrode active material for an all-solid-state battery, comprising:

a core comprising a layered lithium transition metal oxide; and a coating layer disposed on the core and comprising a lithium-ion conductive oxide,
wherein the positive electrode active material is a secondary particle formed by aggregation of a plurality of primary particles, wherein the primary particles have a flake or needle shape and an average thickness of 50 nm or less, and
wherein a full width at half maximum (FWHM) of the diffraction peak of the (110) plane in an X-ray diffraction spectrum is 0.2 or less.

The positive electrode active material may further comprise a primary particle located on the surface of the secondary particle, oriented such that a major axis thereof is aligned in a direction parallel to the surface of the secondary particle.

At least a portion of the secondary particle may include a structure in which major axes of the primary particles are arranged in a radial direction.

The positive electrode active material may have an average crystallite size of 104 nm or more.

The a-axis length may be from 2.871 to 2.872 Å, and the c-axis length may be from 14.227 to 14.229 Å.

The molar ratio (Li/Me) of lithium to transition metal in the lithium transition metal oxide may be from 1.01 to 1.05.

The intensity ratio I(003)/I(104) of the diffraction peak of the (003) plane to that of the (104) plane in an X-ray diffraction spectrum may be from 1.19 to 1.25.

The positive electrode active material may satisfy the following Equation (1):

[Equation 1]

$$0.37 \leq [I\,006 + I\,102]/I\,101 \leq 0.42$$

wherein I(006), I(102), and I(101) represent the diffraction peak intensities of the (006), (102), and (101) planes, respectively, in the X-ray diffraction spectrum.

The lithium transition metal oxide may be represented by the following chemical formula (1):

[Chemical Formula 1]    $Li_a[Ni_{x1}CO_{y1}M_{z1}]O_2$

wherein $1.01 \leq a \leq 1.05$, $0.60 \leq x_1 < 1$, $0 \leq y_1 \leq 0.2$, $0 < z_1 \leq 0.2$, and $x_1 + y_1 + z_1 = 1$, and M is Mn, Al, Mg, Ti, Nb, W, Sc, Zr, Si, V, Fe, Y, Mo, or a combination thereof.

The lithium-ion conductive oxide may be represented by the following chemical formula (2):

[Chemical Formula 2]    $Li_{x2}A_{y2}O_{z2}$

wherein $0 \leq x_2 \leq 3$, $0 < y_2 \leq 2$, and $0 < z_2 \leq 4$, and A is Zr, Nb, Ti, or a combination thereof.

The lithium-ion conductive oxide may be selected from $Li_2ZrO_3$, $ZrO_2$, $LiNbO_3$, $Nb_2O_3$, $Li_2TiO_3$, $TiO_2$, or a combination thereof.

The content of the coating layer may be from 0.5 to 1.5 wt% based on the total weight of the positive electrode active material.

The D50 average particle diameter of the secondary particles may be from 3 to 6 $\mu$m.

The specific surface area of the positive electrode active material may be from 0.4 to 0.7 $m^2/g$.

According to another embodiment of the present invention, there is provided a method for manufacturing a positive electrode active material for an all-solid-state battery, comprising:

preparing a transition metal hydroxide comprising nickel and formed by aggregation of primary particles into a secondary particle,
forming a mixture comprising the transition metal hydroxide and a lithium raw material,
calcining the mixture to form a lithium transition metal oxide; and
forming a coating layer comprising a lithium-ion conductive oxide on a surface of the lithium transition metal oxide,
wherein the primary particles have a flake or needle shape and an average thickness of 50 nm or less, and
wherein the molar ratio (Li/Me) of lithium to transition metal in the mixture is from 1.01 to 1.05.

In the step of forming the mixture, the lithium raw material and the transition metal hydroxide may be mixed such that a molar ratio (Li/Me) of lithium (Li) to transition metal (Me) is from 1.01 to 1.05.

In the step of preparing the transition metal hydroxide, at least a portion of the secondary particles may include a structure in which primary particles are arranged in a radial direction.

In the step of forming the lithium transition metal oxide, the calcination may be performed at a temperature ranging from 720°C to 770°C.

According to another embodiment of the present invention, an electrode comprising the above-described positive electrode active material for an all-solid-state battery is provided.

According to another embodiment of the present invention, there is provided an all-solid-state battery comprising:

a positive electrode; a negative electrode; and a solid electrolyte layer interposed between the positive electrode and the negative electrode, wherein the positive electrode comprises the above-described positive electrode active material.

## ADVANTAGEOUS EFFECTS

The positive electrode active material according to one embodiment of the present invention has a secondary particle structure formed by aggregation of thin primary particles with a flake or needle shape. Due to the small FWHM of the diffraction peak of the (110) plane in X-ray diffraction analysis, the material can improve discharge capacity under high output (high C-rate) conditions.

## BRIEF DESCRIPTION OF THE DRAWINGS

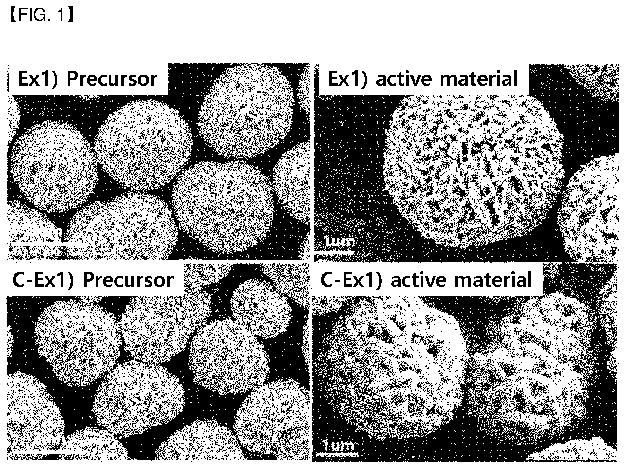

**FIG. 1** is an SEM image of the precursor and the positive electrode active material used in Example 1 and Comparative Example 1.

## DETAILED DESCRIPTION OF THE EMBODIMENTS

The terms "first," "second," and "third," and the like, may be used to describe various parts, components, regions, layers, and/or sections, but are not limited thereto. These terms are used merely to distinguish one part, component, region, layer, or section from another. Accordingly, a "first" component, region, or layer described hereinafter may be referred to as a "second" component, region, or layer without departing from the scope of the present invention.

The technical terminology used herein is intended solely for the purpose of describing particular embodiments and is not intended to be limiting of the invention. Singular expressions used herein shall also include their plural counterparts unless the context clearly dictates otherwise. As used herein, the term "comprising/including/containing/involving/having" specifies the presence of stated features, integers, steps, operations, elements, and/or components, but does not preclude the presence or addition of one or more other features, integers, steps, operations, elements, and/or components.

When a component is described as being "on" or "above/over" another component, it may be disposed directly on or over that component, or intervening components may be present therebetween. In contrast, when a component is described as being "directly on" another component, no intervening component is present.

Unless otherwise defined, all technical and scientific terms used herein have the same meaning as commonly understood by one of ordinary skill in the art to which this invention pertains. Terms generally defined in commonly used dictionaries should be interpreted as having meanings that are consistent with their use in the context of the relevant art and this disclosure, and should not be interpreted in an idealized or overly formal sense unless explicitly defined otherwise.

Unless otherwise stated, all percentages (%) are based on weight, and 1 ppm means 0.0001 wt%.

As used in this specification, the expression "a combination thereof" in a Markush-type formula refers to one or more mixtures or combinations selected from the group consisting of the listed elements, and includes any one or more selected from the group.

Hereinafter, embodiments of the present invention will be described in detail so that those skilled in the art can readily carry out the invention. However, it should be understood that the present invention may be embodied in many different forms and should not be construed as being limited to the embodiments described herein.

## 1. Positive Electrode Active Material for All-Solid-State Battery

According to one embodiment of the present invention, there is provided a positive electrode active material for an all-solid-state battery, comprising:

a core comprising a layered lithium transition metal oxide; and a coating layer disposed on the core and comprising a lithium-ion conductive oxide, wherein the positive electrode active material is a secondary particle formed by aggregation of a plurality of primary particles, wherein each of the primary particles has a flake or needle shape and an average thickness of 50 nm or less, and wherein the full width at half maximum (FWHM) of the diffraction peak of the (110) plane in an X-ray diffraction spectrum is 0.2 or less.

The positive electrode active material according to one embodiment may be suitable for use in all-solid-state batteries, and more specifically, may be used in a composite positive electrode in combination with a sulfide-based solid electrolyte.

The active material includes a core and a coating layer disposed on the core.

The active material is in the form of a secondary particle formed by aggregation of multiple primary particles.

As used herein, the term "primary particle" refers to the smallest unit distinguishable as a single body when observing a cross-section of the positive electrode active material using scanning electron microscopy (SEM), and may consist of a single crystallite or multiple crystallites.

Each primary particle may have a flake or needle morphology, with an average thickness of 50 nm or less, more specifically 50 nm or 40 nm or less. This thin morphology facilitates lithium-ion mobility, thereby significantly improving high-rate discharge characteristics.

The positive electrode active material may further include at least one primary particle located on the surface of the secondary particle, oriented such that the major axis thereof is aligned in a direction parallel to the surface of the secondary particle. Such surface-oriented structure enhances lithium-ion conduction, contributing to improved high-rate performance.

In some cases, at least a portion of the secondary particle may include primary particles arranged in a radial orientation. Such radially aligned primary particles may be predominantly located in the interior of the secondary particle. Accordingly, the material structure may be optimized such that radially oriented primary particles are located in the center, and horizontally aligned primary particles are present at the surface, maximizing discharge performance under high C-rate conditions.

The FWHM of the (110) diffraction peak may be 0.2 or less, more specifically 0.19 or less. Satisfying this condition increases the fraction of exposed crystal facets favorable for lithium-ion conduction at the interface between the active material and the solid electrolyte.

The average crystallite size of the active material may be 104 nm or more, more specifically 106 nm or 108 nm or more. As used herein, "crystallite" refers to a single-crystal grain with a regular atomic arrangement. Crystallite size may be measured by high-resolution transmission electron microscopy (HR-TEM), such as a TITAN G2 instrument at $800,000\times$ to $2,000,000\times$ magnification, and the average may be calculated as an arithmetic mean.

When the crystallite size satisfies the above range, lithium-ion movement within the active material is facilitated, leading to improved cell performance.

The a-axis and c-axis lattice constants of the positive electrode active material may range from 2.871 to 2.872 Å and from 14.227 to 14.229 Å, respectively, as measured by X-ray diffraction (XRD). When both values fall within the preferred range, desirable discharge capacity and cycle performance are achieved. The molar ratio of lithium to transition metal (Li/Me) in the lithium transition metal oxide may be from 1.01 to 1.05. This range enables maximized lithium-ion interfacial mobility between the active material and the solid electrolyte.

The intensity ratio I(003)/I(104) in an XRD pattern may be from 1.19 to 1.25. This intensity ratio, when satisfied, contributes to achieving improved electrochemical performance.

The material may satisfy the following Equation (1):

$$[\text{Equation 1}]$$

$$0.37 \leq [I\,006 + I\,102]/I\,101 \leq 0.42$$

In Equation (1), I(006), I(102), and I(101) respectively refer to the diffraction peak intensities of the (006), (102), and (101) planes in an X-ray diffraction (XRD) spectrum.

When the positive electrode active material satisfies Equation 1, the aforementioned improvements in battery performance can be more effectively realized.

In general, the "peak intensity value" may refer to either the peak height or the integrated area under the peak; however, in the present embodiment, the peak intensity value refers specifically to the integrated area of the diffraction peak.

The D50 average particle diameter of the secondary particles may be from 3 to 6 $\mu$m. Satisfying this range ensures increased contact between the active material and the solid electrolyte, and facilitates interparticle contact, reducing internal resistance.

As used herein, D50 refers to the particle size corresponding to 50% of the cumulative volume distribution. D50 may be measured using a laser diffraction method.

The specific surface area of the positive electrode active material may be from 0.4 to 0.7 $m^2/g$, as measured by the Brunauer-Emmett-Teller (BET) method using a surface area and porosity analyzer (e.g., Micromeritics ASAP2020). A surface area within this range improves electrode-electrolyte contact and reduces interfacial resistance.

The lithium transition metal oxide may be represented by the following chemical formula (1):

$$[\text{Chemical Formula 1}] \qquad Li_a[Ni_{x1}CO_{y1}M_{z1}]O_2$$

wherein $1.01 \leq a \leq 1.05$, $0.60 \leq x_1 < 1$, $0 \leq y_1 \leq 0.2$, $0 < z_1 \leq 0.2$, and $x_1 + y_1 + z_1 = 1$,

and M is one or more selected from the group consisting of Mn, Al, Mg, Ti, Nb, W, Sc, Zr, Si, V, Fe, Y, and Mo.

In the lithium transition metal oxide of Formula 1, a lithium content of $1.01 \leq a \leq 1.05$ is desirable for facilitating the formation of the aforementioned oriented primary particles.

Nickel may be present in an amount corresponding to $0.60 \leq x_1 < 1$, more specifically $0.80 \leq x_1 < 1$. Sufficient nickel content enhances charge/discharge contribution and enables higher capacity.

Cobalt may be present in an amount of $0 \leq y_1 \leq 0.2$. Too little cobalt may compromise rate characteristics and tap density; too much cobalt increases cost and reduces reversible capacity.

In the lithium transition metal oxide represented by Chemical Formula 1, M refers to one or more elements other than lithium, nickel, and cobalt, and may be selected from the group consisting of Mn, Al, Mg, Ti, Nb, W, Sc, Zr, Si, V, Fe, Y, Mo, or a combination thereof. M may be included in an amount corresponding to $0 < z_1 \leq 0.2$.

According to one embodiment of the present invention, the positive electrode active material for an all-solid-state battery comprises a coating layer disposed on the core and containing a lithium-ion conductive oxide. By including the coating layer, side reactions between the layered lithium transition metal oxide and a sulfide-based solid electrolyte can be suppressed, thereby preventing formation of a high-resistance interfacial layer and improving cell capacity and cycle performance.

The lithium-ion conductive oxide may be more specifically represented by the following Chemical Formula 2:

$$[\text{Chemical Formula 2}] \qquad Li_{x2}A_{y2}O_{z2}$$

wherein $0 \leq x_2 \leq 3$, $0 < y_2 \leq 2$, and $0 < z_2 \leq 4$, and A is one or more selected from Zr, Nb, and Ti.

Examples of the lithium-ion conductive oxide may include, but are not limited to, $Li_2ZrO_3$, $ZrO_2$, $LiNbO_3$, $Nb_2O_3$, $Li_2TiO_3$, $TiO_2$, and combinations thereof.

The content of the coating layer may be from 0.5 to 1.5 wt% based on the total weight of the positive electrode active material. If the content of the coating layer is too low, the improvement in electrochemical performance may be insignificant. Conversely, if the content is too high, the proportion of the lithium transition metal oxide may be reduced, which may lead to decreased cell capacity.

## 2. Method for Manufacturing Positive Electrode Active Material for All-Solid-State Battery

According to another embodiment of the present invention, a method for manufacturing a positive electrode active material for an all-solid-state battery is provided. The method comprises: preparing a transition metal hydroxide comprising nickel and formed by aggregation of primary particles into secondary particles, wherein each of the primary particles has a flake or needle shape and an average thickness of 50 nm or less; forming a mixture comprising the transition metal hydroxide and a lithium raw material; calcining the mixture to form a lithium transition metal oxide; and forming a coating layer comprising a lithium-ion conductive oxide on a surface of the lithium transition metal oxide.

Hereinafter, each step of the manufacturing method according to an embodiment of the present invention will be described in detail.

First, a transition metal hydroxide comprising nickel is prepared, wherein the hydroxide is a secondary particle formed by aggregation of primary particles, and each of the primary particles has a flake or needle shape and an average thickness of 50 nm or less.

The transition metal hydroxide serves as a precursor of the positive electrode active material.

In some embodiments, at least a portion of the secondary particle may have a structure in which the major axes of the primary particles are arranged radially.

Such morphology and alignment of the primary particles allow the positive electrode active material prepared therefrom to exhibit the desired particle structure and orientation as described in the positive electrode active material section.

The transition metal hydroxide may be prepared, for example, by coprecipitating a transition metal solution containing a nickel precursor, cobalt precursor, manganese precursor, and a doping precursor selected from Al, Mg, Ti, Nb, W, Sc, Zr, Si, V, Fe, Y, Mo, or combinations thereof, with the addition of ammonia solution and caustic soda solution.

The nickel precursor is not particularly limited and may be any commonly used in the art. Specific examples include nickel-containing sulfates, acetates, nitrates, halides, sulfides, hydroxides, oxides, or oxyhydroxides, such as $NiSO_4$, $NiSO_4 \cdot 6H_2O$, $Ni(OH)_2$, $NiO$, $NiOOH$, $NiCO_3 \cdot 2Ni(OH)_2 \cdot 4H_2O$, $NiC_2O_2 \cdot 2H_2O$, $Ni(NO_3)_2 \cdot 6H_2O$, nickel fatty acid salts, nickel halides, or combinations thereof.

The cobalt precursor may also be any suitable precursor commonly used in the art, such as cobalt-containing sulfates, acetates, nitrates, halides, sulfides, hydroxides, oxides, or oxyhydroxides. Specific examples include $CoSO_4$, $CoSO_4 \cdot 7H_2O$, $Co(OH)_2$, $CoOOH$, $Co(OCOCH_3)_2 \cdot 4H_2O$, $Co(NO_3)_2 \cdot 6H_2O$, or combinations thereof.

The manganese precursor is also not particularly limited and may include manganese-containing sulfates, acetates, nitrates, halides, sulfides, hydroxides, oxides, oxyhydroxides, or combinations thereof. Specific examples include $MnSO_4$, $MnCO_3$, $Mn(NO_3)_2$, manganese acetate, dicarboxylic acid manganese salts, citric acid manganese, manganese stearates, $Mn_2O_3$, $MnO_2$, $Mn_3O_4$, and manganese chlorides.

The transition metal solution may be prepared by dissolving the metal precursors in a solvent, typically water or a mixed solvent of water and a miscible organic solvent (e.g., alcohols), or by mixing aqueous solutions containing each precursor.

The ammonia solution functions as a complexing agent and may include, for example, $NH_3$, $NH_4OH$, $(NH_4)_2SO_4$,

$NH_4NO_3$, $NH_4Cl$, $CH_3COONH_4$, $NH_4CO_3$, or combinations thereof. Meanwhile, the ammonia solution may be used in the form of an aqueous solution. In this case, the solvent may be water, or a mixed solvent of water and an organic solvent that is miscible with water (specifically, alcohols, etc.).

The caustic soda solution functions as a precipitating agent or pH adjuster and may include alkali metal or alkaline earth metal hydroxides such as NaOH, KOH, $Ca(OH)_2$, their hydrates, or combinations thereof. The caustic soda solution may also be used in the form of an aqueous solution. In this case, the solvent may be water, or a mixed solvent of water and an organic solvent that is miscible with water (specifically, alcohols, etc.).

The coprecipitation reaction may be conducted under an inert atmosphere such as nitrogen or argon.

Next, a mixture comprising the transition metal hydroxide and a lithium raw material is prepared.

The molar ratio (Li/Me) of lithium (Li) to transition metal (Me) in the mixture may be from 1.01 to 1.05, more preferably from 1.02 to 1.04. When the Li/Me ratio is within this range, the positive electrode material with exposed edge facets of flake-shaped particles, which facilitates lithium-ion intercalation and deintercalation, can be effectively formed, thereby improving capacity and output characteristics.

The lithium raw material is not particularly limited as long as it is soluble in water, and may include lithium-containing sulfates, nitrates, acetates, carbonates, oxalates, citrates, halides, hydroxides, or oxyhydroxides. Specific examples include $Li_2CO_3$, $LiNO_3$, $LiNO_2$, LiOH, $LiOH \cdot H_2O$, LiH, LiF, LiCl, LiBr, LiI, $CH_3COOLi$, $Li_2O$, $Li_2SO_4$, $Li_3C_6H_5O_7$, or combinations thereof.

The mixture may further include a doping precursor selected from Al, Mg, Ti, Nb, W, Sc, Zr, Si, V, Fe, Y, Mo, or combinations thereof.

The mixture is then subjected to calcination to form a lithium transition metal oxide.

The calcination may be performed at a temperature of 720°C to 770°C, preferably from 730°C to 760°C, for a period of 5 to 20 hours, more specifically from 5 to 15 hours or from 8 to 12 hours, under an oxygen atmosphere. Calcination under these conditions facilitates formation of a crystal structure that enables smooth lithium-ion transport.

Finally, a coating layer comprising a lithium-ion conductive oxide is formed on the surface of the lithium transition metal oxide. Since the lithium-ion conductive oxide has already been described in the foregoing, detailed explanations are omitted.

The coating layer may be formed, for example, by spraying a coating solution containing a coating precursor onto the lithium transition metal oxide, followed by heat treatment and drying. However, the method is not limited thereto and may include any coating method known in the art.

### 3. All-Solid-State Battery

According to another embodiment of the present invention, a positive electrode comprising the above-described positive electrode active material for an all-solid-state battery is provided.

More specifically, the positive electrode may comprise a positive electrode current collector and a positive electrode active material layer disposed thereon, wherein the active material layer may comprise the above-described positive electrode active material for an all-solid-state battery, a sulfide-based solid electrolyte, and a conductive agent. The active material layer may further comprise a binder.

The sulfide-based solid electrolyte may, for example, be a sulfide-based solid electrolyte having an argyrodite-type crystal structure. Specifically, the sulfide-based solid electrolyte may be represented by $Li_{7-x}PS_{6-x}D_x$ ($0 \leq x \leq 2$, where D is F, Cl, Br, I, or a combination thereof). Examples include, but are not limited to, $Li_6PS_5Cl$, $Li_6PS_5Br$, and $Li_6PS_5I$. The sulfide-based solid electrolyte having an argyrodite-type crystal structure may be doped, at least in part, with one or more dopant elements, thereby improving its air stability.

The conductive agent may be selected from the group consisting of graphite, carbon black, acetylene black, Ketjen black, channel black, furnace black, lamp black, thermal black, Tokai black, Denka black, Super P, carbon nanotubes, carbon nanofibers, graphene, fullerenes, and combinations thereof.

The binder may be selected from polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, polymethacrylate, ethylene-propylene-diene monomer (EPDM) rubber, sulfonated EPDM, styrene-butadiene rubber (SBR), butadiene rubber (BR), nitrile butadiene rubber (NBR), styrene-butadiene-styrene (SBS) block copolymer, styrene-ethylene-butadiene (SEB) block copolymer, styrene-(styrene-butadiene)-styrene block copolymer, natural rubber (NR), isoprene rubber (IR), fluoro rubber, or combinations thereof.

In addition to the above components, the positive electrode active material layer may further comprise one or more additives, such as fillers, coating agents, dispersants, and ionic conductivity enhancers.

According to another embodiment of the present invention, an all-solid-state battery is provided, comprising a positive electrode; a negative electrode; and a solid electrolyte layer interposed therebetween, wherein the positive electrode comprises the above-described positive electrode active material.

As the description of the positive electrode has been provided above, repeated explanation will be omitted.

The solid electrolyte layer may comprise a sulfide-based solid electrolyte.

The sulfide-based solid electrolyte may be, for example, a sulfide-based solid electrolyte having an argyrodite-type crystal structure.

Specifically, the sulfide-based solid electrolyte having an argyrodite-type crystal structure may be represented by the formula $Li_{7-x}PS_{6-x}D_x$ ($0 \leq x \leq 2$), where D is F, Cl, Br, I, or a combination thereof.

For example, the sulfide-based solid electrolyte having an argyrodite-type crystal structure may be $Li_6PS_5Cl$, $Li_6PS_5Br$, $Li_6PS_5I$, or a combination thereof, although it is not limited thereto.

The sulfide-based solid electrolyte having an argyrodite-type crystal structure may be doped, at least partially, with a dopant element in its crystal structure. Accordingly, the air stability of the solid electrolyte may be improved.

The solid electrolyte included in the positive electrode active material layer and the solid electrolyte included in the solid electrolyte layer may be the same or different.

The solid electrolyte layer may further comprise a binder. The binder included in the solid electrolyte layer may include, for example, polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, polymethacrylate, ethylene-propylene-diene monomer (EPDM) rubber, sulfonated EPDM, styrene-butadiene rubber (SBR), butadiene rubber (BR), nitrile-butadiene rubber (NBR), styrene-butadiene-styrene (SBS) block copolymer, styrene-ethylene-butadiene (SEB) block copolymer, styrene-(styrene-butadiene)-styrene block copolymer, natural rubber (NR), isoprene rubber (IR), fluoro rubber, or a combination thereof, although not limited thereto. The binder included in the solid electrolyte layer may be the same as or different from the binder included in the positive electrode active material layer or the negative electrode active material layer.

The negative electrode may comprise a negative electrode current collector and a negative electrode active material layer disposed on the negative electrode current collector, and the negative electrode active material layer may comprise a negative electrode active material.

The negative electrode active material may include a material capable of reversibly intercalating and deintercalating lithium ions, lithium metal, an alloy of lithium metal, a material capable of lithium doping and dedoping, or a transition metal oxide.

The material capable of reversibly intercalating and deintercalating lithium ions may be a carbonaceous material, and any carbon-based negative electrode active material conventionally used in lithium-ion secondary batteries may be employed. Representative examples include crystalline carbon, amorphous carbon, or combinations thereof. Examples of crystalline carbon include graphite such as amorphous, plate-shaped, flake-shaped, spherical, or fibrous natural graphite or artificial graphite. Examples of amorphous carbon include soft carbon (low-temperature fired carbon), hard carbon, mesophase pitch-based carbon, calcined coke, and the like.

The lithium metal alloy may include an alloy of lithium and a metal selected from the group consisting of Na, K, Rb, Cs, Fr, Be, Mg, Ca, Sr, Si, Sb, Pb, In, Zn, Ba, Ra, Ge, Al, and Sn.

The material capable of lithium doping and dedoping may include Si, $SiO_X$ ($0 < x < 2$), a Si-Y alloy (where Y is an element selected from the group consisting of alkali metals, alkaline earth metals, group 13 elements, group 14 elements, transition metals, rare earth elements, and combinations thereof, excluding Si), Sn, $SnO_2$, Sn-Y (where Y is an element selected from the group consisting of alkali metals, alkaline earth metals, group 13 elements, group 14 elements, transition metals, rare earth elements, and combinations thereof, excluding Sn), or a combination thereof. These materials may also be used in combination with $SiO_2$. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and combinations thereof.

Examples of the transition metal oxide include vanadium oxide and lithium vanadium oxide.

The negative electrode active material layer may further comprise a binder and, optionally, a conductive material.

The binder functions to adhere the negative electrode active material particles to each other and to the current collector. Representative examples of the binder include polyvinyl alcohol, carboxymethyl cellulose, hydroxypropyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, and the like, without being limited thereto.

The conductive material may be used to impart electrical conductivity to the electrode, and any electronically conductive material that does not cause chemical change in the battery may be used. Examples include carbon-based materials such as natural graphite, artificial graphite, carbon black, acetylene black, Ketjen black, and carbon fibers; metal-based materials such as powders or fibers of copper, nickel, aluminum, or silver; conductive polymer materials such as polyphenylene derivatives; or mixtures thereof.

The current collector may be selected from the group consisting of copper foil, nickel foil, stainless steel foil, titanium foil, nickel foam, copper foam, polymer substrates coated with a conductive metal, and combinations thereof.

Hereinafter, the embodiments of the present invention will be described in greater detail with reference to specific examples. However, the following examples are merely illustrative of one preferred embodiment of the present invention, and the present invention is not limited thereto.

**EXAMPLE 1**

**(1) Preparation of Positive Electrode Active Material**

**(Preparation of Transition Metal Hydroxide):**

A transition metal hydroxide was prepared in the form of secondary particles formed by aggregation of primary particles, wherein the primary particles had a flake shape with a thin average thickness, and the long axes of the primary particles located inside the secondary particles were arranged in a radial manner.

**(Formation of Lithium Transition Metal Oxide):**

The transition metal hydroxide and LiOH were mixed such that the molar ratio (Li/Me) of lithium (Li) to the transition metal (Me) was 1.03, followed by calcination at 740°C under an oxygen atmosphere to form a lithium transition metal oxide.

**(Formation of Coating Layer):**

Metallic lithium was dissolved in anhydrous ethanol to prepare a Li-ethoxide solution. Subsequently, 70 wt% zirconium(IV) tetrapropoxide in a propanol solution was added to the prepared solution, followed by stirring for at least 10 minutes to obtain a coating solution. The coating solution was loaded into a fluidized bed coater, and the lithium transition metal oxide of the above composition was charged therein. Wet coating was performed under the conditions of solution concentration of 0.03 mol, solution feed rate of 6 cc/min, and spray time of 60 minutes. Thereafter, heat treatment was carried out at 300°C for 2 hours under an oxygen atmosphere to form a $Li_2ZrO_3$ coating layer on the surface of the lithium transition metal oxide, thereby obtaining a positive electrode active material.

**(2) Fabrication of All-Solid-State Battery**

72 wt% of the prepared positive electrode active material, 25 wt% of Argyrodite-type solid electrolyte ($Li_6PS_5Cl$), and 3 wt% of Super C65 as a conductive agent were mixed to obtain a composite powder. 100 mg of the Argyrodite-type solid electrolyte ($Li_6PS_5Cl$) functioning as a separator was first charged into a test jig for solid-state battery evaluation, and compressed at a pressure of 300 MPa or higher to form a solid electrolyte layer with a thickness of about 100 $\mu$m. Then, the composite powder was charged to one side such that the amount of the positive electrode active material was 14.4 mg, and a second pressing was applied to fabricate the positive electrode layer. Subsequently, a Li-In alloy was loaded on the opposite side and pressed under an appropriate pressure to complete the assembly of the all-solid-state battery.

**COMPARATIVE EXAMPLE 1**

A transition metal hydroxide with a thicker average primary particle thickness was prepared by modifying the coprecipitation reaction conditions during the precursor synthesis step. Except for the calcination temperature being set at 730°C during the formation of the lithium transition metal oxide, the remaining procedures were identical to Example 1, and a comparative positive electrode active material and all-solid-state battery were fabricated accordingly.

**EXPERIMENTAL EXAMPLE 1: SEM Imaging of Positive Electrode Active Material**

SEM (Scanning Electron Microscope) imaging was performed for the transition metal hydroxide (precursor) and the corresponding positive electrode active material obtained in Example 1 and Comparative Example 1. The results are shown in FIG. 1.

Referring to FIG. 1, the transition metal hydroxide of Example 1 was confirmed to be a secondary particle formed by aggregation of very thin flake- or needle-shaped primary particles. The corresponding positive electrode active material also exhibited secondary particles formed by aggregation of very thin flake- or needle-shaped primary particles, and it was confirmed that some primary particles on the surface of the secondary particles were oriented such that their major axis was aligned in a direction parallel to the surface.

In contrast, the transition metal hydroxide of Comparative Example 1 was confirmed to have a structure comprising secondary particles formed by aggregation of relatively thicker flake- or needle-shaped primary particles. The positive electrode active material prepared therefrom similarly exhibited secondary particles having thicker flake- or needle-shaped primary particles.

**EXPERIMENTAL EXAMPLE 2: Evaluation of Physicochemical Properties of Positive Electrode Active Material**

The physicochemical properties of the positive electrode active materials prepared according to Example 1 and Comparative Example 1 were evaluated and are summarized in Table 2 below.

(1) Evaluation of c-axis and a-axis lattice parameters, I(003)/I(104), [I(006)+I(102)]/I(101), and FWHM(110):
The structural characteristics were measured using X-ray diffraction (XRD) analysis.
(2) Evaluation of Average Crystallite Size:
High-resolution transmission electron microscopy (HR-TEM, TITAN G2) was employed at magnifications ranging from 800,000$\times$ to 2,000,000$\times$ to measure the surface of the sample. The average crystallite size was calculated as the arithmetic mean of individually measured grain sizes.
(3) Volume Measurement:
The volume of the active material was evaluated.
(4) Evaluation of Average Thickness of Primary Particles:
The average thickness was determined by analyzing SEM or TEM images of the positive electrode active material and calculating the arithmetic mean.

(Table 2)

| Sample | FWHM(11 0) | Crystallite Size (nm) | c-axis Length (Å) | a-axis Length (Å) | I(003)/I(104) | [I(006)+I(102)]/I(101) | Volume (Å$^3$) |
|---|---|---|---|---|---|---|---|
| Example 1 | 0.1873 | 109.7 | 14.22717 | 2.87164 | 1.21 | 0.40 | 101.604 |
| Comparative Example 1 | 0.2246 | 91.6 | 14.22867 | 2.87124 | 1.21 | 0.40 | 101.586 |

**Experimental Example 4: Evaluation of Electrochemical Properties of All-Solid-State Battery**

The electrochemical properties of the lithium secondary batteries fabricated in accordance with Example 1 and Comparative Example 1 were evaluated, and the results are summarized in Table 3 below. The specific evaluation methods are as follows:

(1) Initial Charge and Discharge Capacity and Initial Efficiency at 0.1C

The fabricated all-solid-state battery test cells were mounted on a charge/discharge tester, and charge/discharge characteristics were evaluated at 30°C. In the first cycle, charging was performed by a constant current-constant voltage (CC-CV) method at a current rate of 0.1C. The cut-off voltage for charging was set to 3.7 V, and the cut-off current was set to 0.02C. Discharging was performed at a constant current of 0.1C, with the cut-off voltage set to 1.9 V. The charge capacity, discharge capacity, and initial efficiency were measured under these conditions.

(2) High-Rate Discharge Capacity at 2.0C

The discharge capacity was evaluated at a high-rate condition of 2.0C, which corresponds to a 20-fold increase compared to 0.1C.

(3) Cycle Life Evaluation (30 Cycles, 0.5C)

Following the 2.0C high-rate discharge test, the same test cell from Example 1 was subjected to cycle testing under 0.5C charge and 0.5C discharge conditions (corresponding to a fivefold increase over 0.1C), and the capacity retention after 30 cycles was evaluated.

(Table 3)

| Sample | Initial Charge Capacity (0.1C, mAh/g) | Initial Discharge Capacity (0.1C, mAh/g) | Initial Efficiency (0.1C, %) | High-Rate Discharge Capacity (2.0C, mAh/g) | Cycle Retention (30 cycles, 0.5C, %) |
|---|---|---|---|---|---|
| Example 1 | 221.1 | 208.9 | 94.5 | 168.2 | 98.7 |
| Comparative Example 1 | 219.8 | 207.3 | 94.3 | 157.2 | 98.2 |

Referring to Table 2, it was confirmed that in Example 1, where the primary particle thickness, full width at half maximum (FWHM) of the (110) plane, crystallite size, and other material properties were appropriately controlled, the capacity, rate capability, and cycle characteristics were all remarkably excellent. In contrast, in Comparative Examples 1 and 2, where the primary particles were excessively thick, the FWHM(110) was too large, and the crystallite size was too small, it was confirmed that the capacity, rate capability, and cycle performance were inferior.

Although the foregoing describes a preferred embodiment of the present invention, it is to be understood that the present invention is not limited thereto, and various modifications and alterations can be made without departing from the spirit or scope of the invention as set forth in the appended claims and detailed description, as well as the accompanying drawings. Therefore, the true scope of the present invention shall be defined by the appended claims and their equivalents.

**Claims**

1.  A positive electrode active material for an all-solid-state battery, comprising:

    a core comprising a layered lithium transition metal oxide; and
    a coating layer disposed on the core and comprising a lithium-ion conductive oxide,
    wherein the positive electrode active material is a secondary particle formed by aggregation of a plurality of primary particles,
    wherein the primary particles have a flake or needle shape with an average thickness of 50 nm or less,
    and wherein the full width at half maximum (FWHM) of the diffraction peak of the (110) plane in an X-ray diffraction spectrum is 0.2 or less.

2.  The positive electrode active material for an all-solid-state battery of claim 1, further comprises:
    a primary particle which is located on the surface of the secondary particle and oriented such that their major axis is aligned in a horizontal direction with respect to the surface of the secondary particle.

3.  The positive electrode active material for an all-solid-state battery of claim 1,
    wherein at least a portion of the secondary particle comprises a structure in which the major axes of the primary particles are arranged in a radial direction.

4.  The positive electrode active material for an all-solid-state battery of claim 1,
    wherein the average crystallite size is 104 nm or more.

5.  The positive electrode active material for an all-solid-state battery of claim 1,
    wherein the a-axis length is from 2.871 to 2.872 Å and the c-axis length is from 14.227 to 14.229 Å.

6.  The positive electrode active material for an all-solid-state battery of claim 1,
    wherein the molar ratio of lithium to transition metal (Li/Me) in the lithium transition metal oxide is from 1.01 to 1.05.

7.  The positive electrode active material for an all-solid-state battery of claim 1,
    wherein the ratio of the diffraction peak intensity of the (003) plane to that of the (104) plane (I(003)/I(104)) in an X-ray diffraction spectrum is from 1.19 to 1.25.

8.  The positive electrode active material for an all-solid-state battery of claim 1,

    wherein the material satisfies the following formula (1):

[Formula 1]

$$0.37 \leq [I(006) + I(102)] / I(101) \leq 0.42,$$

wherein I(006), I(102), and I(101) are the diffraction peak intensities of the (006), (102), and (101) planes, respectively, in an X-ray diffraction spectrum.

9. The positive electrode active material for an all-solid-state battery of claim 1,

wherein the lithium transition metal oxide is represented by the following chemical formula (1):

[Chemical Formula 1]     $Li_a[Ni_{x1}Co_{y1}M_{z1}]O_2$

wherein $1.01 \leq a \leq 1.05$, $0.60 \leq x_1 < 1$, $0 \leq y_1 \leq 0.2$, $0 < z_1 \leq 0.2$, and $x_1 + y_1 + z_1 = 1$, and M is Mn, Al, Mg, Ti, Nb, W, Sc, Zr, Si, V, Fe, Y, Mo, or a combination thereof.

10. The positive electrode active material for an all-solid-state battery of claim 1,

wherein the lithium-ion conductive oxide is represented by the following chemical formula (2):

[Chemical Formula 2]     $Li_{x2}A_{y2}O_{Z2}$

wherein $0 \leq x_2 \leq 3$, $0 < y_2 \leq 2$, $0 < z_2 \leq 4$, and A is Zr, Nb, Ti, or a combination thereof.

11. The positive electrode active material for an all-solid-state battery of claim 1,
wherein the lithium-ion conductive oxide is $Li_2ZrO_3$, $ZrO_2$, $LiNbO_3$, $Nb_2O_3$, $Li_2TiO_3$, $TiO_2$, or a combination thereof.

12. The positive electrode active material for an all-solid-state battery of claim 1,
wherein the content of the coating layer is 0.5 to 1.5 wt% based on the total weight of the positive electrode active material.

13. The positive electrode active material for an all-solid-state battery of claim 1,
wherein the D50 average particle diameter of the secondary particles is from 3 to 6 $\mu$m.

14. The positive electrode active material for an all-solid-state battery of claim 1,
wherein the specific surface area is from 0.4 to 0.7 m$^2$/g.

15. A method for manufacturing a positive electrode active material for an all-solid-state battery, comprising:

preparing a transition metal hydroxide comprising nickel and formed by aggregation of primary particles into a secondary particle,
wherein the primary particles have a flake or needle shape with an average thickness of 50 nm or less;
forming a mixture comprising the transition metal hydroxide and a lithium raw material;
calcining the mixture to form a lithium transition metal oxide; and
forming a coating layer comprising a lithium-ion conductive oxide on a surface of the lithium transition metal oxide.

16. The method of claim 15,
wherein, in the step of forming the mixture, the molar ratio (Li/Me) of lithium (Li) in the lithium raw material to transition metal (Me) in the transition metal hydroxide is from 1.01 to 1.05.

17. The method of claim 15,

wherein, in the step of preparing the transition metal hydroxide,
at least a portion of the secondary particles has a structure in which the major axes of the primary particles are arranged in a radial direction.

18. The method of claim 15,

wherein the calcination is performed at a temperature of 720°C to 770°C.

19. An electrode comprising the positive electrode active material for an all-solid-state battery according to any one of claims 1 to 14.

20. An all-solid-state battery comprising:

a positive electrode;
a negative electrode; and
a solid electrolyte layer interposed between the positive electrode and the negative electrode,
wherein the positive electrode comprises the positive electrode active material for an all-solid-state battery according to any one of claims 1 to 14.

【FIG. 1】

## INTERNATIONAL SEARCH REPORT

| International application No. |
|---|
| **PCT/KR2023/017903** |

| A. | CLASSIFICATION OF SUBJECT MATTER |
|---|---|

**H01M 4/36**(2006.01)i; **H01M 4/525**(2010.01)i; **H01M 4/505**(2010.01)i; **H01M 4/62**(2006.01)i; **H01M 4/131**(2010.01)i; **H01M 10/052**(2010.01)i; **C01G 53/00**(2006.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/36(2006.01); H01M 10/0525(2010.01); H01M 4/02(2006.01); H01M 4/525(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전고체 전지(all solid state battery), 양극(cathode), 코어(core), 코팅(coating), 판상 (flake), 침상(needle), X선 회절(X-ray diffraction), 반치폭(full width at half maximum)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2022-146720 A (JX NIPPON MINING & METALS CORP.) 05 October 2022 (2022-10-05)<br>See abstract; paragraphs [0010]-[0011], [0018], [0023], [0040] and [0057]-[0058]; and figure 1. | 1-20 |
| A | KR 10-2010-0099337 A (SUMITOMO METAL MINING CO., LTD. et al.) 10 September 2010 (2010-09-10)<br>See entire document. | 1-20 |
| A | KR 10-2018-0076275 A (SAMSUNG ELECTRONICS CO., LTD.) 05 July 2018 (2018-07-05)<br>See entire document. | 1-20 |
| A | JP 2008-176981 A (TOYOTA MOTOR CORP.) 31 July 2008 (2008-07-31)<br>See entire document. | 1-20 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 February 2024** | **20 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/017903**

### C.    DOCUMENTS CONSIDERED TO BE RELEVANT

| Category* | Citation of document, with indication, where appropriate, of the relevant passages | Relevant to claim No. |
|---|---|---|
| A | PAYANDEH, S. et al. Tailoring the LiNbO3 coating of Ni-rich cathode materials for stable and high-performance all-solid-state batteries. Nano Research Energy. 2022 [publication date 24 June 2022], vol. 1, thesis no. e9120016, pp. 1-7.<br>    See entire document. | 1-20 |

Form PCT/ISA/210 (second sheet) (July 2022)

## INTERNATIONAL SEARCH REPORT
### Information on patent family members

International application No.

**PCT/KR2023/017903**

| Patent document cited in search report | | | Publication date (day/month/year) | Patent family member(s) | | | Publication date (day/month/year) |
|---|---|---|---|---|---|---|---|
| JP | 2022-146720 | A | 05 October 2022 | None | | | |
| KR | 10-2010-0099337 | A | 10 September 2010 | CN | 100589265 | C | 10 February 2010 |
| | | | | CN | 101167209 | A | 23 April 2008 |
| | | | | EP | 1876664 | A1 | 09 January 2008 |
| | | | | EP | 1876664 | B1 | 15 June 2011 |
| | | | | JP | 2008-118279 | A1 | 18 December 2008 |
| | | | | JP | 4726896 | B2 | 20 July 2011 |
| | | | | KR | 10-0991650 | B1 | 02 November 2010 |
| | | | | KR | 10-1220677 | B1 | 09 January 2013 |
| | | | | KR | 10-2007-0116158 | A | 06 December 2007 |
| | | | | US | 2009-0029253 | A1 | 29 January 2009 |
| | | | | US | 8728666 | B2 | 20 May 2014 |
| | | | | WO | 2006-118279 | A1 | 09 November 2006 |
| KR | 10-2018-0076275 | A | 05 July 2018 | JP | 2018-106974 | A | 05 July 2018 |
| | | | | US | 2018-0219219 | A1 | 02 August 2018 |
| JP | 2008-176981 | A | 31 July 2008 | None | | | |

Form PCT/ISA/210 (patent family annex) (July 2022)